(19) Europäisches Patentamt
European Patent Office
Office européen des brevets

(11) Veröffentlichungsnummer **0 202 570**
**B1**

(12) # EUROPÄISCHE PATENTSCHRIFT

(45) Veröffentlichungstag der Patentschrift: **22.03.89**

(51) Int. Cl.[4]: **C 09 B 62/09**, C 09 B 62/513, D 06 P 1/38

(21) Anmeldenummer: **86106414.5**

(22) Anmeldetag: **12.05.86**

(54) **Reaktivfarbstoffe.**

(30) Priorität: **14.05.85 DE 3517366**

(43) Veröffentlichungstag der Anmeldung: **26.11.86 Patentblatt 86/48**

(45) Bekanntmachung des Hinweises auf die Patenterteilung: **22.03.89 Patentblatt 89/12**

(84) Benannte Vertragsstaaten: **CH DE FR GB IT LI**

(56) Entgegenhaltungen:
**EP-A- 0 042 108**
**EP-A- 0 115 626**
**FR-A- 1 483 235**
**FR-A- 2 187 861**

**CHEMICAL ABSTRACTS, Band 95, Nr. 1, Juli 1981, Seite 82, Nr. 8801u, Columbus, Ohio, US; CS - A - 184 466 (JARKOVSKY, JIRI et al.) 15.07.1980**
**CHEMICAL ABSTRACTS, Band 101, Nr. 16, Oktober 1984, Seite 95, Nr. 132453p, Columbus, Ohio, US; & JP - A - 59 89 363 (SUMITOMO CHEMICAL CO., LTD.) 23.05.1984**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Krueger, Heinz, Dr., Berliner Platz 12, D-6703 Limburgerhof (DE)**
Erfinder: **Lardon, Hartmut, Dr., Brüsseler Ring 28, D-6700 Ludwigshafen (DE)**
Erfinder: **Patsch, Manfred, Dr., Fritz-Wendel-Strasse 4, D-6706 Wachenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 202 570 B1

**Beschreibung**

Die Erfindung betrifft Verbindungen, die in Form der freien Säure der Formel I

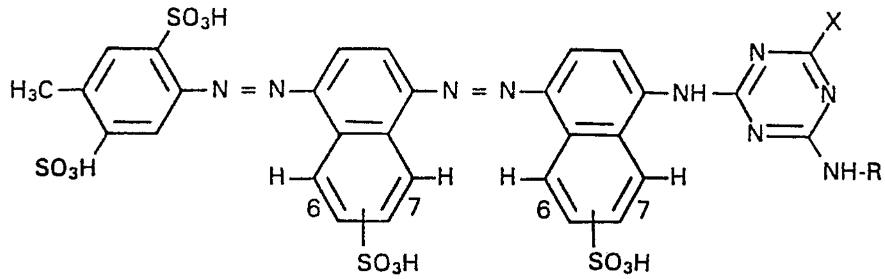

entsprechen, in der

X Chlor oder Fluor und

R Wasserstoff, Vinylsulfonylphenyl, β-Sulfatoethylsulfonylphenyl, Vinylsulfonylbenzyl, Sulfophenyl oder β-Sulfatoethylsulfonylbenzyl sind.

Die Farbstoffe können wir üblich hergestellt werden, Einzelheiten sind in den Beispielen beschrieben, in denen sich Teile und Prozente, sofern nicht anders vermerkt, auf das Gewicht beziehen.

Die Verbindungen der Formel I eignen sich zum Färben hydroxylgruppenhaltiger Fasern, vorzugsweise von Baumwolle, insbesondere nach dem Ausziehverfahren. Man erhält farbstarke rotbraune Färbungen mit guten Echtheiten und guter Auswaschbarkeit des nicht fixierten Farbstoffes.

Gegenüber dem aus der schweizer Patentschrift 471 870 bekannten Farbstoff zeichnen sich die erfindungsgemäßen Verbindungen überraschenderweise durch höhere Farbstärke und einen erwünschten rotbraunen Farbton aus, außerdem ist die Lichtechtheit besser.

Gegenüber ähnlichen Farbstoffen ohne Methylgruppe weisen die erfindungsgemäßen Verbindungen eine drastisch gesteigerte Farbstärke auf.

Von besonderer Bedeutung ist die erfindungsgemäße Verbindung mit X = Cl und den Sulfogruppen in 6-Stellung der Naphthalinreste.

*Beispiel 1*

26,7 Teile wäßrig-salzsauer diazotierter 4-Methylanilin-2,5-disulfonsäure werden auf 22,3 Teile Clevesäure-6 gekuppelt, wobei die Kupplung mit 7,5 Teilen Natriumhydrogencarbonat zunächst bei pH 2-3, dann bei pH 5 durchgeführt wird. Sobald keine freie Diazoverbindung mehr nachweisbar ist, wird mit 33 Teilen 23%iger Natriumnitritlösung und 27,4 Teilen 20%iger Salzsäure 30 Minuten bei 10-15°C diazotiert. Überschüssiges Nitrit wird mit Sulfamidsäure zerstört, dann werden 22 Teile Clevesäure-6 zugegeben. Durch langsames Einstreuen von insgesamt 8 Teilen Natriumhydrogencarbonat wird die Kupplung bei pH 4 zu Ende geführt. Der so erhaltene Diazoaminofarbstoff wird mit einer Suspension von 19,5 Teilen Cyanurchlorid in 190 Teilen Eiswasser bei pH 6 umgesetzt, bis keine freien Aminogruppen mehr nachzuweisen sind. Dabei werden 2 Teile Trinatriumphosphat und 50 Teile 10%ige Natronlauge zur Aufrechterhaltung eines konstanten pH-Wertes benötigt.

Dann wird überschüssiges Cyanurchlorid abfiltriert und die Farbstofflösung 2 Stunden bei 40°C mit 27,2 Teilen 25%igem Ammoniak umgesetzt. Der Farbstoff wird durch Aussalzen mit Kaliumchlorid isoliert und entspricht der Formel

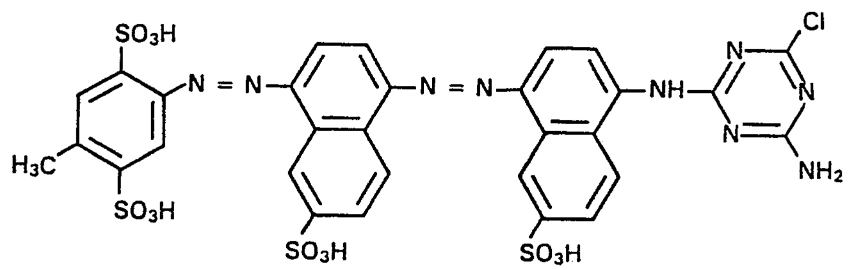

Er färbt Baumwolle in echten rotbraunen Farbtönen.

*Beispiel 2*

Werden anstelle von 27,2 Teilen 25%igem Ammoniak wie in Beispiel 1 29 Teile 3-p-Sulfatoethylsulfonylanilin eingesetzt und die Umsetzungsbedingungen auf pH 6-7 und 30-40°C geändert, so erhält man einen Farbstoff der Formel

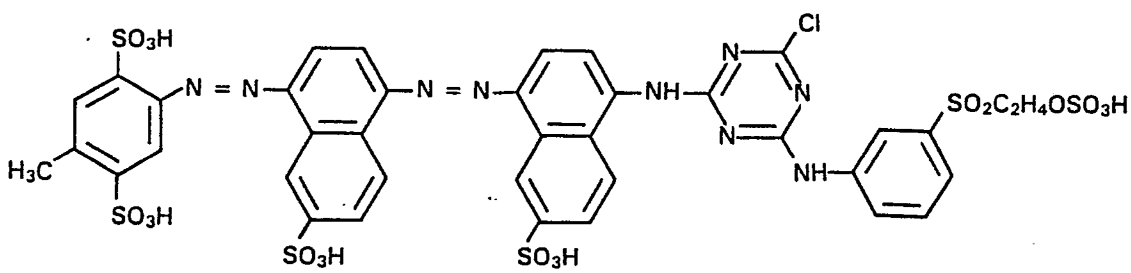

Er färbt Baumwolle in echten rotbraunen Farbtönen.

Weitere Braunfarbstoffe mit guten Eigenschaften sind in der folgenden Tabelle aufgeführt, wobei in Spalte I und II die verwendeten Kupplungskomponenten und in Spalte III der am Triazinanker gebundene Aminrest aufgeführt sind.

| Beispiel | I | II | III |
|---|---|---|---|
| 3 | 1-Aminonaphthalin-6-sulfonsäure | 1-Aminonaphthalin-6-sulfonsäure | 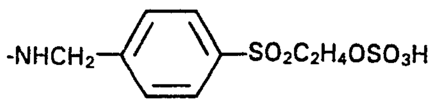 |
| 4 | » | » | 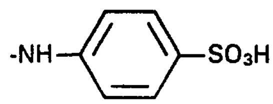 |
| 5 | » | » | 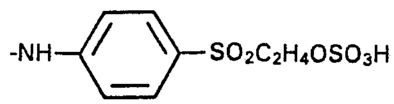 |
| 6 | 1-Aminonaphthalin-7-sulfonsäure | » | 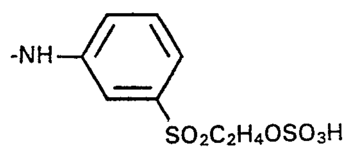 |
| 7 | 1-Aminonaphthalin-6-sulfonsäure | » | 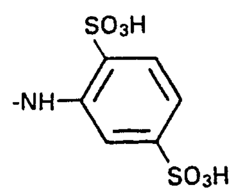 |

**Patentansprüche**

1. Verbindungen, die in Form der freien Säure der Formel I

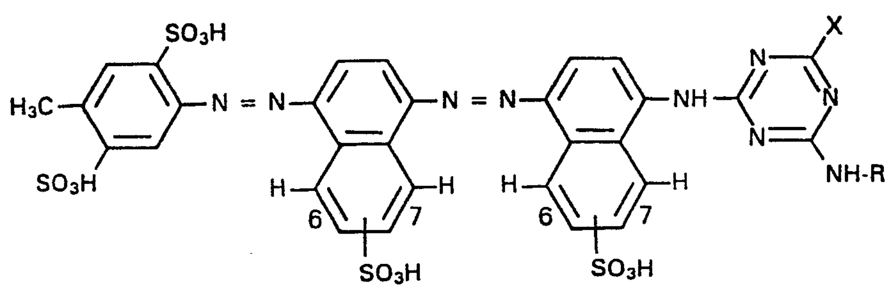

entsprechen, in der

X Chlor oder Fluor und

R Wasserstoff, Vinylsulfonylphenyl, β-Sulfatoethylsulfonylphenyl, Vinylsulfonylbenzyl, Sulfophenyl oder β-Sulfatoethylsulfonylbenzyl sind.

2. Die Verbindung gemäss Anspruch 1, bei der X Chlor und R Wasserstoff sind.

3. Verwendung der Verbindungen gemäss Anspruch 1 zum Färben hydroxylgruppenhaltiger Fasern, insbesondere von Baumwolle.

**Claims**

1. A compound which, in the form of the free acid, is of the formula I

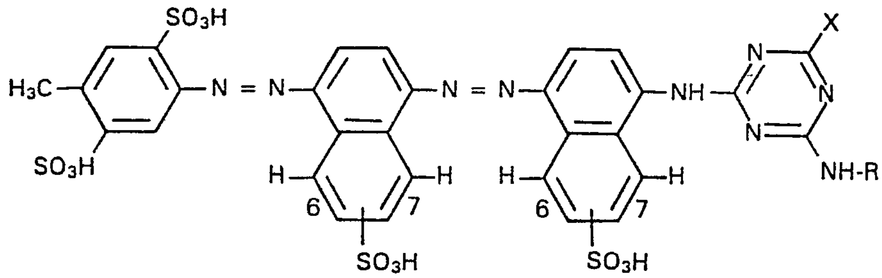

where X is chlorine or fluorine and R is hydrogen, vinylsulfonylphenyl, β-sulfatoethylsulfonylphenyl, vinylsulfonylbenzyl, sulfophenyl or β-sulfatoethylsulfonylbenzyl.

2. The compound as claimed in Claim 1, wherein X is chlorine and R is hydrogen.

3. Use of the compound as claimed in claim 1 for dyeing hydroxyl-containing fibers, in particular cotton.

**Revendications**

1. Composés qui ont sous forme d'acide libre la formule I

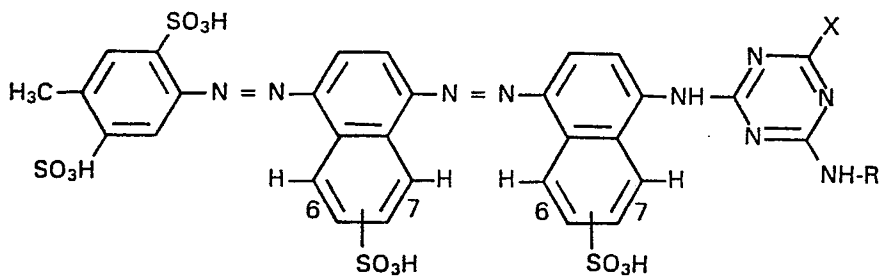

dans laquelle X est le chlore ou le fluor, et R est un atome d'hydrogene ou un groupement vinylsulfonylphényle, β-sulfatoéthylsulfonylphényle, vinylsulfonylbenzyle, sulfophényle ou β-sulfatoéthylsulfonylbenzyle.

2. Composé selon la revendication 1, dans lequel X est le chlore et R l'hydrogène.

3. Utilisation des composés selon la revendication 1 pour teindre des fibres contenant des groupements hydroxy, en particulier en coton.